# EUROPEAN PATENT APPLICATION

(11) **EP 0 622 102 A1**
(43) Date of publication of application: **02.11.1994**
(21) Application number: 94302117.0
(22) Date of filing: 24.03.1994
(51) Int. Cl.: B01D 39/20, B01D 29/01

(54) **Filters and filter manufacture**

(30) Priority: 28.04.1993 GB 9308800
(71) Applicant: Pall Corporation, East Hills, New York 11548 (US)
(72) Inventor: Jay, Martin, Brighton, BN2 5JA (GB); Riley, Roger Stott, Portsmouth, PO8 0AU (GB)
(74) Representative: Knott, Stephen Gilbert

(57) **Abstract**

A filter is formed from porous metal filter media which is cut into strips (10) and then connected edge-to-edge by welding to form a corrugated sheet with the welds (19) forming ridges on alternately opposite sides of the sheet. This has significant benefits over corrugating the sheet by bending including an absence of cracking and so a significantly better filter performance.

## Description

The invention relates to filters and filter manufacture and particularly to metal filters and their manufacture.

Metal filters are used in hostile environments where filters of, for example, plastics materials are not satisfactory. It has been proposed to form such filters from a sheet of porous stainless steel pleated into corrugations. The corrugated sheet may be formed into a cylinder.

It has been found that some stainless steel media are prone to damage when subject to the pleating necessary to form the corrugations. This is particularly the case where the medium is a thick composite of more than one layer. The media can crack along the stressed ridges of the corrugations and sometimes delamination occurs.

Such damage and inherent weakness can be exaggerated when the media is subject to reverse flows, flows near sonic velocity and high differential pressures. Any one of these can stress the weakened ridges to the point of collapse. This can cause the corrugations to vibrate, bend or close-up, blocking the flow path through the media.

According to a first aspect of the invention, there is provided a filter comprising V-shaped corrugations having a plurality of ridges on alternately opposite sides of the filter, each wall of each corrugation being formed by a porous metal strip having spaced side edges and each ridge being formed by a welded connection between two side edges of adjacent strips.

By welding together sheets to form the ridges, the ridges are unstressed. The weld supports and strengthens the ridge and cracking and damage are mitigated.

According to a second aspect of the invention, there is provided a method of manufacturing a filter comprising forming a plurality of porous metal strips with each strip having spaced side edges and then connecting the strips to form a corrugated filter having a plurality of ridges on alternately opposite sides of the filter, the corrugations being V-shaped and each ridge being formed by a welded connection between two sides edges of two adjacent strips.

The following is a more detailed description of the embodiment of the invention, by way of example, reference being made to the accompanying drawings in which:-
Figure 1 is a schematic elevational view of a welding jig showing two porous metal strips arranged in a V-configuration and welded together along respective side edges, and
Figure 2 is a view of the jig similar to the view of Figure 1 showing the connection of further porous sheets to form a succession of oppositely directed V-shaped corrugations with the ridges being formed by a weld.

Referring to the drawings, the filter to be described is formed from a sheet of porous metal media. The first layer of the sheet is of the kind manufactured and sold by Pall Corporation under the trade mark PMF. The media is formed from very fine short 316L stainless steel fibres in a uniform structure with the fibres sintered together at their points of contact. The PMF is supported by a second layer of a porous metal media of the kind manufactured and sold by Pall Corporation under the trade mark PMM. This is a thin sintered matrix of stainless steel powder within the pore structure of a stainless steel woven wire mesh.

Such media are described in GB-A-2160895. The rating of the PMF media is 2µm as measured by a modified F2 test method at β = 100.

The sheet is cut into strips 10 so that each strip has parallel side edges 11 with the width between the side edges 11 of each strip being identical. The strips 10 have identical lengths equal to the required length of the filter.

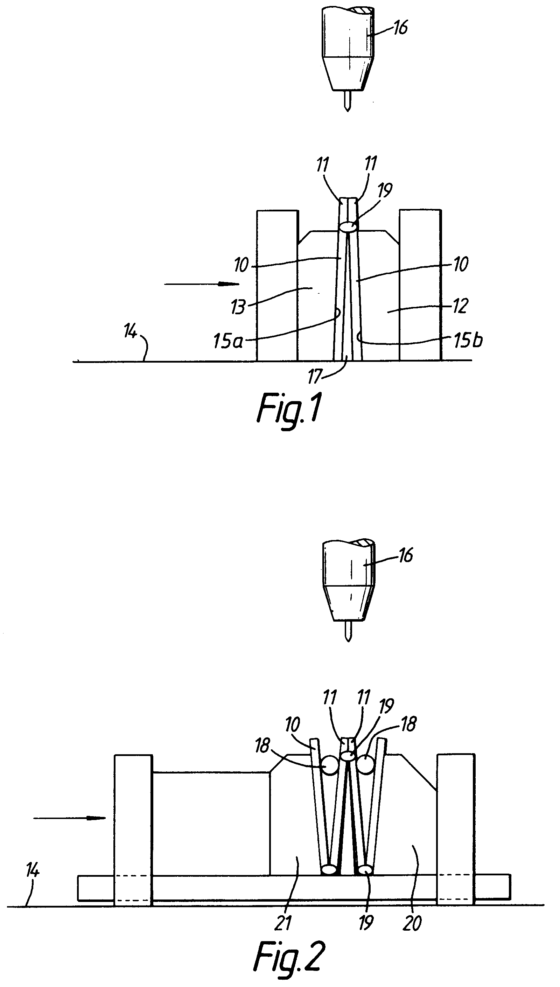

The strips 10 are welded together in a manner to be described below using the jig shown in Figures 1 and 2. As seen in these figures, the jig comprises a fixed chill 12 and a moveable chill 13 mounted on a table 14. The chills 12,13 are formed from copper and have co-operating faces 15a,15b lying in respective planes inclined to the vertical by equal amounts and converging as they extend away from the table 14.

A welding torch 16 is arranged above the table and is reciprocable in a vertical direction between the position shown in Figure 1 and a position in which the torch is adjacent the chills 10,11. The welding torch 16 may be part of a MICROTIG (trade mark) welding system using a micropulse 75 amps (max) tungsten inert gas power source supplied by Precision Beam Technologies. The welding system is mounted on a lathe to allow the welding torch 16 to be moved in a linear path. The position of the torch 16 in directions normal to said path is controlled by a touch and retract system also supplied by Precision Beam Technologies.

An inner chill spacer 17, also of copper extends between the chills 12,13 and has a cross-section which is an isosceles triangle with the side faces each parallel to a respective face 15a,15b of the adjacent chill 12,13.

The filter is formed by placing two strips 10 between the chills 12,13, with one strip 10 located between one of the faces of the inner chill spacer and an associated face 14 or 15 of the adjacent chill 12 or 13, as seen in Figure 1. The two strips 10 thus form an inverted V-shape with respective ones of their two side edges 11 in contact and spaced above the upper edges of the chills 12,13. The chills 12,13 act to clamp the strips 10 in this position. The torch 16 can then be moved by the touch and retract system downwardly to a position against these contacting edges 11 and then be moved by the lathe along the edges to form a weld 19 between the edges 11.

The welded V-shaped sub-unit so produced is then removed from the jig and a second and subsequent pairs of sheets 10 welded together in the same way to form a plurality of V-shaped sub-units.

Next, two V-shaped sub-units are inverted and located between two further chills 20,21, as seen in Figure 2. The angle between the adjacent sheets 10 of the two V-shaped sub-units is maintained by the inner chill spacer 17 and the angle between the sheets 10 of each V-shaped sub-unit is maintained by a copper rod chill 18 extending along the length of each V-shaped sub-unit.

The adjacent side edges 11 of the sheets 10 of the two V-shaped sub-units are then welded together by the welding torch 16 to form a W-shaped unit, as seen in Figure 2.

The W-shaped units are then welded together until a sheet is formed with as many corrugations as required. In every case, each ridge of the corrugations is formed by a weld as described above. When the sheet is complete, it may be bent into a circle and the side edges 11 of the final sheets 10 welded together to form a cylindrical filter. Such a cylindrical filter can then be provided with stainless steel end caps (not shown) connected thereto by a two-part epoxy resin in known manner. Of course, if the sheets 10 had side edges 11 that were not parallel, frusto conical filters may be formed.

In order to test the performance of a filter manufactured as described above, such a filter ("the welded filter") was manufactured with 140 pleats (involving 280 welds) in the manner described above. A second filter ("the pleated filter") of the same dimensions was manufactured using a method in which a sheet formed as described above (from which the strips 10 were cut) was not formed into strips but pleated by bending.

The two filters were first examined visually. The pleated filter had obvious signs of cracking, despite several intermediate annealing stages. These cracks were sealed using powdered stainless steel which was subsequently sintered in place.

The welded filter was free from cracks.

Both filters were bubble-tested in isopropylalcohol. In this test, a filter is immersed in isopropylalcohol and air under pressure applied to the interior of the filter. The pressure is increased until the first bubble is observed emerging from the outer surface of the filter being tested.

The pressure at which the first bubble was observed in the welded filter was three times higher than the pressure at which the first bubble was observed in the pleated filter. The leaks, when they appeared in the welded filter, were located in portions of the strips 10 which were not adjacent to any weld whereas, with the pleated filter, the leaks were observed from the ridges of the corrugations.

It is concluded, therefore, that a welded filter, has significantly improved performance over a pleated filter. Each weld acts as a beam supporting the two sheets 10 on either side of the weld. The beams resist movement in all directions preventing collapse of the sheets 10 or flapping or vibration of the sheets 10.

The filter can be constructed by a semi-automated manufacturing process which gives constant corrugation configuration and strength. The corrugations formed are sharp uniform and regular and exhibit uniform height giving low entrance and exit pressure losses.

A test on a filter produced as described above with reference to the drawings shows low leakage when the flow is cyclically reversed or when subjected to a constant back flow. Examples of filters manufactured as described above with reference to the drawings exhibited no delamination, good integrity, straight regularly-shaped pleats and an overall performance significantly better than filters formed with bent corrugations.

## Claims

1. A filter of the kind comprising V-shaped corrugations having a plurality of ridges on alternately opposite sides of the filter, characterised in that each wall of each corrugation is formed by a porous metal strip (10) having spaced side edges (11) and each ridge is formed by a welded connection (19) between two side edges (11) of adjacent strips (10).

2. A filter according to claim 1, characterised in that the side edges (11) of each strip (10) are parallel and the spacing between said side edges (11) is the same in each strip (10).

3. A filter according to claim 1 or claim 2 and in the form of a cylinder so that the ridges lie alternately on one of two imaginary concentric circles.

4. A filter according to any one of claims 1 to 3, characterised in that the porous metal strip (10) comprises two layers of porous metal media, the first layer being of stainless steel fibres in a uniform structure with the fibres sintered together at their points of contact and the second layer being a stainless steel woven wire mesh and a sintered metal particulate bonded in the openings in said mesh.

5. A method of manufacturing a filter comprising forming a plurality of porous metal strips (10), each strip having spaced side edges (11), and then connecting the strips (10) to form a corrugated filter having a plurality of ridges on alternately opposite sides of the filter, the corrugations being V-shaped and each ridge being formed by a welded connection (19) between two side edges of two adjacent strips (10).

6. A method according to claim 5 including arranging two strips (10) in a V-configuration with respective ones of said respective two side edges (11) in contact and then welding said contacting side edges (11) to form a ridge.

7. A method according to claim 6 and further comprising arranging two pairs of V-configuration strips (10) to form a W-configuration with the other side edge (11) of one of the strips (10) of one of the V-configurations contacting the other side edge (11) of one of the strips (10) of the other V-configuration, said contacting sides (11) being welded together to form a ridge.

8. A method according to claim 7 and comprising connecting together at least two of said W-configurations by contacting respective other side edges (11) of respective final strip (10) of the two W-configurations together and then welding said contacting edges (11) to form a ridge.

9. A method according to claim 8 and further comprising bending said plurality of connected W-configurations into a tube so that the other edges (11) of the final strips (10) of the connected W-configurations contact one another, with a weld (19) being provided between said contacting edges to form a ridge.
